# FASCICULE DE BREVET EUROPEEN

(11) **EP 3 853 078 B1**
(45) Date de publication et mention de la délivrance du brevet: **28.09.2022**
(21) Numéro de dépôt: 19774151.5
(22) Date de dépôt: 29.08.2019
(51) Int. Cl.: B60R 21/02

(54) **DISPOSITIF DE GUIDAGE POUR VEHICULE UTILITAIRE ET PROCEDE D'ASSEMBLAGE**
FÜHRUNGSVORRICHTUNG FÜR EIN NUTZFAHRZEUG UND MONTAGEVERFAHREN
GUIDE DEVICE FOR A UTILITY VEHICLE, AND ASSEMBLY METHOD

(30) Priorité: 18.09.2018 FR 1858376
(43) Date de publication de la demande: 28.07.2021
(73) Titulaire: PSA Automobiles SA, 78300 Poissy (FR)
(72) Inventeur: VIRY, Patrick, 25200 MONTBELIARD (FR); VAZQUEZ, Ruben, 36400 PORRINO (PONTEVEDRA) (ES); VAZQUEZ SABARIEGO, José Ignacio, 36400 PORRINO (PONTEVEDRA) (ES)
(86) Numéro de dépôt international: PCT/FR2019/051991
(87) Numéro de publication internationale: WO 2020/058590

(56) Documents cités:
- EP-A1- 2 913 231
- WO-A1-2015/028730
- WO-A1-2016/111653
- WO-A1-2018/051314
- DE-U1- 9 002 531
- FR-A1- 2 547 547
- FR-A1- 3 010 018
- FR-A1- 3 010 019
- FR-A1- 3 014 778

## Description

La présente invention concerne le domaine des véhicules utilitaires, et en particulier les véhicules utilitaires équipés d'une cloison de séparation destinée à séparer un habitacle du véhicule d'un espace de chargement, de sorte à empêcher des charges (des objets lourds et/ou volumineux) qui sont stockées dans l'espace de chargement, de passer dans l'habitacle en cas de choc véhicule.

Cependant, il peut être intéressant de prévoir une option consistant à offrir une cloison de séparation mobile pour améliorer la modularité du véhicule utilitaire. Par exemple, le document WO201851314 décrit une paroi de séparation pour des véhicules utilitaires qui comprend au moins une plaque fixe et une porte coulissante qui peut coulisser par rapport à ladite paroi fixe, prédisposée pour séparer la cabine du véhicule du compartiment de chargement. En contrepartie, il faut prévoir des dispositifs de guidage pour par exemple permettre une translation de la cloison de séparation dans le véhicule.

Les documents DE9002531 et FR2547547 décrivent d'autres solution de cloisons de séparation mobile à l'intérieur d'un véhicule.

De tels dispositifs de guidage comportent typiquement un rail de guidage et un chariot de guidage qui coulisse dans le rail. Il peut être alors compliqué sur chaîne de montage de prévoir un assemblage simple, car les rails de guidage sont longs et encombrants, avec des chariots de guidage qui sont libres en translation, et enfin avec la cloison de séparation qui est très encombrante.

En raison des tolérances de fabrication, il faut également prévoir que la position de chaque rail de guidage ne sera pas forcément répétable, à quelques millimètres prés, ce qui ajoute une complexité supplémentaire. Le document FR 3 014 778 A1 décrit un dispositif de guidage selon le préambule de la revendication 1. Z

Un des buts de l'invention est de proposer des dispositifs de guidages à monter en véhicule, qui soient simples à fabriquer, et dont l'installation en véhicule ne requière pas de précaution ni d'opération complexes.

A cet effet, un premier objet de l'invention concerne un dispositif de guidage pour une cloison de séparation d'un véhicule utilitaire pésentant les caractéristiques de la revendication 1.

Le dispositif de montage selon la mise en œuvre ci-dessus reste simple, puisqu'il ne comprend qu'un chariot de guidage et qu'un rail de guidage, mais son assemblage en véhicule est simple car l'entretoise temporaire permet de figer la position du chariot de guidage sur le rail de guidage, pendant la phase de montage. Ainsi, l'opérateur de montage n'a pas besoin de s'occuper du chariot de guidage. Il est alors entendu que l'entretoise temporaire est retirée après la phase de montage.

Avantageusement, la direction transversale est une direction transversale du véhicule. Autrement dit, la direction du rail de guidage est une direction X du véhicule, et la direction transversale est une direction Y du véhicule.

Avantageusement, le dispositif de guidage comprend un index de fixation temporaire, tel qu'une vis de fixation, et l'entretoise temporaire est fixée sur le rail de guidage avec l'index temporaire, avant la phase de montage. Un tel index temporaire (une vis, une goupille, une pige, un verrou quart de tour) permet de retirer aisément l'entretoise temporaire en fin de montage, pour alors libérer le chariot de guidage.

Avantageusement, le chariot de guidage est fixé au rail de guidage via l'index temporaire. En d'autres termes, l'entretoise temporaire et le chariot de guidage sont fixés sur le rail de guidage via la même interface de fixation.

Avantageusement, l'entretoise temporaire est prise en sandwich entre le chariot de guidage et le rail de guidage via l'index temporaire. Ainsi, la position latérale du chariot de guidage est définie en fonction de l'épaisseur de l'entretoise temporaire.

Avantageusement, l'entretoise temporaire comprend une poignée de manipulation. Une telle poignée améliore l'ergonomie pour les opérateurs de montage.

Avantageusement, le chariot de guidage est un chariot à galet. Typiquement, le chariot de guidage comprend un galet qui roule dans le rail de guidage, et en particulier dans une piste du rail de forme complémentaire.

Un deuxième aspect de l'invention concerne un véhicule utilitaire automobile comprenant un premier et un deuxième dispositif de guidage selon le premier aspect.

Avantageusement, le véhicule utilitaire automobile comprend une cloison de séparation, agencée pour séparer un habitacle d'un espace de chargement, dans lequel la cloison de séparation est agencée pour être fixée à chacun des chariots de guidage de chaque dispositif de guidage.

Avantageusement, la cloison de séparation comprend :
- une première fixation agencée pour être attachée à un premier chariot de guidage d'un premier dispositif de guidage,
- une deuxième fixation, agencée pour être fixée à un deuxième chariot de guidage du deuxième dispositif de guidage,
et une des deux fixations présente, avant fixation sur les chariot de guidage, un degré de liberté par rapport à la cloison de séparation selon la direction transversale, de sorte à pouvoir compenser une variabilité de position de montage des rails de guidage, selon la direction transversale. En d'autres termes, la cloison de séparation est fixée sur un des chariots de guidage sans pouvoir ajuster sa position relative, alors que sur l'autre chariot de guidage, un jeu (c'est-à-dire un degré de liberté) est prévu, pour récupérer une dispersion géométrique de la caisse du véhicule.

Avantageusement, la fixation qui présente un degré de liberté selon la direction transversale est un trou oblong.

Un troisième aspect de l'invention concerne un procédé d'assemblage d'un véhicule utilitaire selon le deuxième aspect, comprenant les étapes consistant à :
- positionner et attacher un premier chariot de guidage sur un premier rail de guidage avec une entretoise temporaire, de sorte à former un premier dispositif de guidage à monter,
- positionner et attacher un deuxième chariot de guidage sur un deuxième rail de guidage avec une entretoise temporaire, de sorte à former un deuxième dispositif de guidage à monter,
- fixer le premier rail du premier dispositif de guidage sur le véhicule,
- fixer le deuxième rail du deuxième dispositif de guidage, sur le véhicule,
- fixer la cloison de séparation sur le premier chariot de guidage du premier dispositif de guidage,
- fixer la cloison de séparation sur le deuxième chariot de guidage du deuxième dispositif de guidage,
- retirer les entretoises temporaires, de sorte à libérer la cloison de séparation.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue isométrique d'un intérieur de véhicule utilitaire, comprenant une cloison de séparation séparant un habitacle d'un espace de chargement du véhicule utilitaire ;
- la figure 2 représente une vue arrière du véhicule de la figure 1 ;
- la figure 3 représente un détail d'un dispositif de guidage de la paroi de séparation, en cours de montage sur une ligne de fabrication.

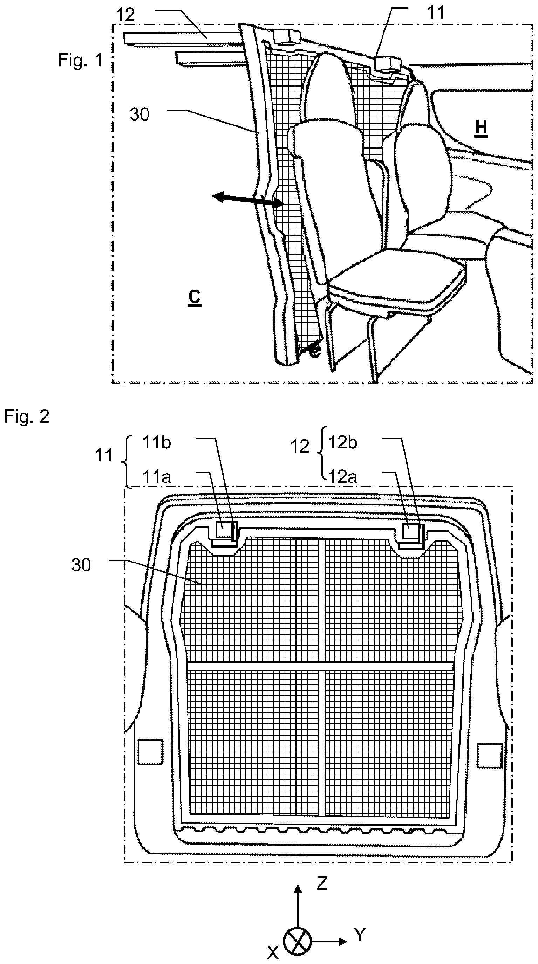

La figure 1 représente un véhicule utilitaire avec une cloison de séparation 30 qui peut coulisser le long d'un axe longitudinal X du véhicule. A cet effet, deux dispositifs de guidage 11 et 12 selon l'invention sont prévus.

Comme le montre la figure 2, chaque dispositif de guidage est principalement formé par un rail de guidage 11a et 12a, et par un chariot de guidage 11b et 12b respectivement.

La cloison de séparation 30 est vissée sur chacun des chariots de guidage.

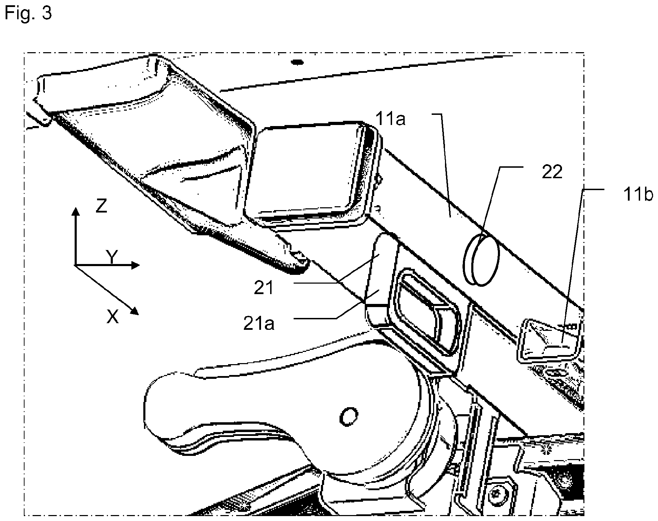

Pour faciliter l'opération de montage, l'invention propose de prévoir une entretoise temporaire 21, visible figure 3, pour chacun des dispositifs de guidage 11 et 12, qui sera retirée en fin de montage. L'entretoise temporaire 21 est fixée par un index temporaire, ici une vis 22, qui traverse le rail de guidage 11a ou 12a et l'entretoise temporaire 21 pour s'engager dans le chariot de guidage 11b ou 12b respectivement.

En conséquence, lorsque l'entretoise temporaire 21 est en place, la position en X du chariot de guidage est imposée, ainsi que sa position latérale en Y. Ce blocage temporaire de ces degrés de liberté permet de faciliter l'opération de montage, car l'opérateur en charge n'a pas besoin de se préoccuper de la position des chariots de guidage 11b et 12b : ils sont fixes par rapport à leur rail de guidage 11a ou 12a.

Il suffit donc de fixer les rails de guidage 11a 12a sur le véhicule, et ensuite de présenter la cloison de séparation 30 en regard des chariots de guidages maintenus en place par l'entretoise temporaire 21 et la vis temporaire 22. Il est alors possible de facilement attacher la cloison de séparation 30 sur chaque chariot de guidage 11b et 12b.

Un avantage supplémentaire procuré par l'invention est de pouvoir compenser aisément les dispersions géométriques selon l'axe Y du véhicule. En effet, chaque chariot de guidage 11b et 12b est maintenu par l'entretoise temporaire 21 et la vis temporaire 22, si bien que leur position en Y est imposée par le rail de guidage 11a et 12a. En prévoyant un trou oblong dans la cloison de séparation 30, cela permet de récupérer toutes les dispersions, alors que le chariot de guidage 11b ou 12b est statique est maintenu en place, et le vissage de la cloison de séparation est aisé.

Une fois la cloison de séparation 30 totalement fixée sur les chariots 11b et 12b, il faut libérer ces derniers. A cet effet, il suffit de retirer l'index temporaire, c'est-à-dire la vis temporaire 22 de chaque système de guidage et retirer les entretoises temporaires 21. Pour faciliter cette opération, il est prévu des poignées 21a sur chaque entretoise temporaire afin d'offrir une bonne prise en main.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Dispositif de guidage (11, 12) pour une cloison de séparation (30) d'un véhicule utilitaire, à monter sur le véhicule utilitaire et comprenant :
- un rail de guidage (11a, 12a),
- un chariot de guidage (11b, 12b), le dispositif de guidage (11, 12) comprenant au moins une entretoise temporaire (21), attachée au rail de guidage (11a, 12a) avant une phase de montage du dispositif de guidage (11, 12) en véhicule, et agencée pour pré-positionner le chariot de guidage (11b, 12b) dans le rail selon au moins une direction de coulissement ], **caractérisé en ce que** l'entretoise temporaire (21) est agencée pour pré-positionner le chariot de guidage (11 b, 12b) dans le rail selon une direction transversale à la direction de coulissement.

2. Dispositif de guidage (11, 12) selon la revendication précédente, dans lequel la direction transversale est une direction transversale du véhicule.

3. Dispositif de guidage (11, 12) selon l'une des revendications précédentes, comprenant un index de fixation temporaire, tel qu'une vis de fixation (22), et dans lequel l'entretoise temporaire (21) est fixée sur le rail de guidage (11a, 12a) avec l'index temporaire, avant la phase de montage.

4. Dispositif de guidage (11, 12) selon la revendication précédente, dans lequel le chariot de guidage (11b, 12b) est fixé au rail de guidage (11a, 12a) via l'index temporaire.

5. Dispositif de guidage (11, 12) selon la revendication précédente, dans lequel l'entretoise temporaire (21) est prise en sandwich entre le chariot de guidage (11b, 12b) et le rail de guidage (11a, 12a) via l'index temporaire.

6. Dispositif de guidage (11, 12) selon l'une des revendications précédentes, dans lequel l'entretoise temporaire (21) comprend une poignée de manipulation.

7. Véhicule utilitaire automobile comprenant un premier et un deuxième dispositif de guidage (11, 12) selon l'une des revendications précédentes, et comprenant une cloison de séparation (30), agencée pour séparer un habitacle d'un espace de chargement, dans lequel la cloison de séparation (30) est agencée pour être fixée à chacun des chariots de guidage de chaque dispositif de guidage (11, 12).

8. Véhicule utilitaire automobile selon la revendication précédente, dans lequel la cloison de séparation (30) comprend :
- une première fixation agencée pour être attachée à un premier chariot de guidage (11b, 12b) d'un premier dispositif de guidage (11, 12),
- une deuxième fixation, agencée pour être fixée à un deuxième chariot de guidage (11b, 12b) du deuxième dispositif de guidage (11, 12),
et dans lequel une des deux fixations présente, avant fixation sur les chariot de guidage (11b, 12b), un degré de liberté par rapport à la cloison de séparation (30) selon la direction transversale, de sorte à pouvoir compenser une variabilité de position de montage des rails de guidage, selon la direction transversale.

9. Véhicule utilitaire automobile selon la revendication précédente, dans lequel la fixation qui présente un degré de liberté selon la direction transversale est un trou oblong.

10. Procédé d'assemblage d'un véhicule utilitaire selon l'une des revendications 7 à 9, comprenant les étapes consistant à :
- positionner et attacher un premier chariot de guidage (11b, 12b) sur un premier rail de guidage (11a, 12a) avec une entretoise temporaire (21), de sorte à former un premier dispositif de guidage (11, 12) à monter,
- positionner et attacher un deuxième chariot de guidage (11b, 12b) sur un deuxième rail de guidage (11a, 12a) avec une entretoise temporaire (21), de sorte à former un deuxième dispositif de guidage (11, 12) à monter,
- fixer le premier rail du premier dispositif de guidage (11, 12) sur le véhicule,
- fixer le deuxième rail du deuxième dispositif de guidage (11, 12) sur le véhicule,
- fixer la cloison de séparation (30) sur le premier chariot de guidage (11b, 12b), du premier dispositif de guidage (11, 12),
- fixer la cloison de séparation (30) sur le deuxième chariot de guidage (11b, 12b), du deuxième dispositif de guidage (11, 12),
- retirer les entretoises temporaires.

## Patentansprüche

1. Führungsvorrichtung (11, 12) für eine Trennwand (30) eines Nutzfahrzeuges zur Montage am Nutzfahrzeug, mit:
- eine Führungsschiene (11a, 12a),
- einem Führungswagen (11b, 12b),
**dadurch gekennzeichnet, dass** die Führungseinrichtung (11, 12) mindestens einen temporären Steg (21) umfasst, der vor einer Montagephase der Führungseinrichtung (11, 12) in einem Fahrzeug an der Führungsschiene (11a, 12a) befestigt und dazu eingerichtet ist, den Führungsschlitten (11b, 12b) in der Schiene in mindestens einer Gleitrichtung und einer Richtung quer zur Gleitrichtung vorzupositionieren.

2. Führungsvorrichtung (11, 12) nach dem vorhergehenden Anspruch, wobei die Querrichtung eine Querrichtung des Fahrzeugs ist.

3. Führungsvorrichtung (11, 12) nach einem der vorhergehenden Ansprüche, die einen temporären Befestigungszapfen, wie eine Befestigungsschraube (22), aufweist, und wobei der temporäre Abstandshalter (21) mit dem temporären Zapfen vor der Montagephase an der Führungsschiene (11a, 12a) befestigt ist.

4. Führungsvorrichtung (11, 12) nach dem vorhergehenden Anspruch, wobei der Führungsschlitten (11b, 12b) an der Führungsschiene (11a, 12a) über den temporären Zeigefinger befestigt ist.

5. Führungsvorrichtung (11, 12) nach dem vorhergehenden Anspruch, wobei der temporäre Abstandshalter (21) zwischen dem Führungsschlitten (11b, 12b) und der Führungsschiene (11a, 12a) über den temporären Zeigefinger sandwichartig angeordnet ist.

6. Führungsvorrichtung (11, 12) nach einem der vorhergehenden Ansprüche, bei der der temporäre Abstandshalter (21) einen Handhabungsgriff umfasst.

7. Kraftfahrzeug mit einer ersten und einer zweiten Führungsvorrichtung (11, 12) nach einem der vorhergehenden Ansprüche, und mit einer Trennwand (30), die angeordnet ist, um einen Fahrgastraum von einem Laderaum zu trennen, wobei die Trennwand (30) angeordnet ist, um an jedem der Führungsschlitten jeder Führungsvorrichtung (11, 12) befestigt zu werden.

8. Nutzfahrzeug nach dem vorhergehenden Anspruch, wobei die Trennwand (30) umfasst:
- eine erste Halterung, die zur Befestigung an einem ersten Führungsschlitten (11b, 12b) einer ersten Führungseinrichtung (11, 12) vorgesehen ist,
- eine zweite Halterung, die zur Befestigung an einem zweiten Führungswagen (11b, 12b) der zweiten Führungseinrichtung (11, 12) ausgebildet ist,
und wobei eine der beiden Halterungen vor der Befestigung an den Führungsschlitten (11b, 12b) einen Freiheitsgrad bezüglich der Trennwand (30) in Querrichtung aufweist, sodass eine Variabilität der Montageposition der Führungsschienen in Querrichtung kompensiert werden kann.

9. Kraftfahrzeug nach dem vorhergehenden Anspruch, wobei die Befestigung, die einen Freiheitsgrad in Querrichtung aufweist, ein Langloch ist.

10. Verfahren zum Zusammenbau eines Nutzfahrzeugs nach einem der Ansprüche 7 bis 9, mit den Schritten:
- einen ersten Führungswagen (11b, 12b) auf einer ersten Führungsschiene (11a, 12a) mit einem temporären Steg (21) so zu positionieren und zu befestigen, dass eine erste zu montierende Führungseinrichtung (11, 12) gebildet wird,
- einen zweiten Führungswagen (11b, 12b) auf einer zweiten Führungsschiene (11a, 12a) mit einem temporären Steg (21) so zu positionieren und zu befestigen, dass eine zweite zu montierende Führungseinrichtung (11, 12) gebildet wird,
- die erste Schiene der ersten Führungseinrichtung (11, 12) am Fahrzeug zu befestigen,
- die zweite Schiene der zweiten Führungseinrichtung (11, 12) am Fahrzeug zu befestigen,
- die Trennwand (30) am ersten Führungswagen (11b, 12b) der ersten Führungseinrichtung (11, 12) zu befestigen,
- die Trennwand (30) am zweiten Führungswagen (11b, 12b) der zweiten Führungseinrichtung (11, 12) zu befestigen,
- Entfernen Sie die temporären Streben.

## Claims

1. Guiding device (11, 12) for a dividing wall (30) of a commercial vehicle, to be mounted on the commercial vehicle and comprising:
- a guide rail (11a, 12a),
- a guide carriage (11b, 12b),
**characterized in that** the guide device (11, 12) comprises at least one temporary spacer (21), attached to the guide rail (11a, 12a) before a phase of mounting the guide device (11, 12) in a vehicle, and arranged to pre-position the guide carriage (11b, 12b) in the rail in at least one sliding direction and a direction transverse to the sliding direction.

2. A guide device (11, 12) according to the preceding claim, wherein the transverse direction is a transverse direction of the vehicle.

3. Guide device (11, 12) according to one of the preceding claims, comprising a temporary fixing index, such as a fixing screw (22), and in which the temporary spacer (21) is fixed to the guide rail (11a, 12a) with the temporary index, before the assembly phase.

4. A guide device (11, 12) according to the preceding claim, wherein the guide carriage (11b, 12b) is fixed to the guide rail (11a, 12a) via the temporary index.

5. A guide device (11, 12) according to the preceding claim, wherein the temporary spacer (21) is sandwiched between the guide carriage (11b, 12b) and the guide rail (11a, 12a) via the temporary index.

6. A guide device (11, 12) according to one of the preceding claims, wherein the temporary spacer (21) comprises a handle.

7. A commercial motor vehicle comprising first and second guide means (11, 12) according to any one of the preceding claims, and comprising a partition (30), arranged to separate a passenger compartment from a loading space, wherein the partition (30) is arranged to be attached to each of the guide carriages of each guide means (11, 12).

8. A commercial motor vehicle according to the preceding claim, wherein the partition (30) comprises:
- a first fastener arranged to be attached to a first guide carriage (11b, 12b) of a first guide device (11, 12),
- a second fastener, arranged to be fastened to a second guide carriage (11b, 12b) of the second guide device (11, 12),
and in which one of the two fasteners has, before fastening to the guide carriages (11b, 12b), a degree of freedom with respect to the partition (30) in the transverse direction, so as to be able to compensate for a variability in the mounting position of the guide rails, in the transverse direction.

9. A commercial motor vehicle according to the preceding claim, wherein the fastener which has a degree of freedom in the transverse direction is an elongated hole.

10. A method of assembling a commercial vehicle according to one of claims 7 to 9, comprising the steps of:
- positioning and attaching a first guide carriage (11b, 12b) on a first guide rail (11a, 12a) with a temporary spacer (21), so as to form a first guide device (11, 12) to be mounted,
- positioning and attaching a second guide carriage (11b, 12b) on a second guide rail (11a, 12a) with a temporary spacer (21), so as to form a second guide device (11, 12) to be mounted,
- fasten the first rail of the first guide device (11, 12) to the vehicle,
- fasten the second rail of the second guide device (11, 12) to the vehicle,
- fasten the partition (30) to the first guide carriage (11b, 12b) of the first guide device (11, 12),
- fasten the partition (30) to the second guide carriage (11b, 12b) of the second guide device (11, 12),
- remove temporary spacers.
